(19) Europäisches Patentamt / European Patent Office / Office européen des brevets

(11) **EP 3 188 598 B1**

(12) # EUROPÄISCHE PATENTSCHRIFT

(45) Veröffentlichungstag und Bekanntmachung des Hinweises auf die Patenterteilung:
**12.12.2018 Patentblatt 2018/50**

(21) Anmeldenummer: **15778603.9**

(22) Anmeldetag: **03.09.2015**

(51) Int Cl.:
**A01N 31/16** *(2006.01)*     **A01N 43/16** *(2006.01)*
**A01P 3/00** *(2006.01)*     **A01N 43/12** *(2006.01)*
**A01N 43/90** *(2006.01)*

(86) Internationale Anmeldenummer:
**PCT/DE2015/000443**

(87) Internationale Veröffentlichungsnummer:
**WO 2016/034165 (10.03.2016 Gazette 2016/10)**

(54) **ZUSAMMENSETZUNG UND VERFAHREN ZUR BEKÄMPFUNG VON PHYTHOPATHOGENEN PILZEN**

COMPOSITION AND METHOD FOR COMBATING PHYTOPATHOGENE FUNGI

COMPOSITION ET PROCÉDÉ POUR LA LUTTE CONTRE DES CHAMPIGNONS PHYTOPATHOGÈNES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.09.2014 DE 102014013302**

(43) Veröffentlichungstag der Anmeldung:
**12.07.2017 Patentblatt 2017/28**

(73) Patentinhaber: **Hochschule Anhalt
06366 Köthen (DE)**

(72) Erfinder:
- **BALTRUSCHAT, Helmut
  39619 Arendsee, OT Ziemendorf (DE)**
- **KABRODT, Kathrin
  06406 Bernburg (DE)**
- **SCHELLENBERG, Ingo
  06847 Dessau-Rosslau (DE)**

(74) Vertreter: **Fischer, Volker
Sperling, Fischer & Heyner
Patentanwälte
Bruno-Wille-Straße 9
39108 Magdeburg (DE)**

(56) Entgegenhaltungen:
**WO-A1-2013/110258    JP-B2- 3 698 745
US-A1- 2010 015 262**

- **Michelle Wilmot: "Inhibition of Phytopathogenic Fungi on Selected Vegetable Crops by Catechins, Caffeine, Theanine and Extracts of Camellia sinensis (L.) O. Kuntze", Master Thesis, Faculty of Natural and Agricultural Sciences, University of Pretoria, 1. September 2006 (2006-09-01), Seiten 1-132, XP055062694, Pretoria, South Africa Gefunden im Internet: URL:http://upetd.up.ac.za/thesis/submitted/etd-07302008-144409/unrestricted/dissertation.pdf [gefunden am 2013-05-13] in der Anmeldung erwähnt**
- **URSKA VRHOVSEK ET AL: "A Versatile Targeted Metabolomics Method for the Rapid Quantification of Multiple Classes of Phenolics in Fruits and Beverages", JOURNAL OF AGRICULTURAL AND FOOD CHEMISTRY, Bd. 60, Nr. 36, 3. April 2012 (2012-04-03) , Seiten 8831-8840, XP055235155, US ISSN: 0021-8561, DOI: 10.1021/jf2051569**
- **NADA EL DARRA ET AL: "A Comparative Study on Antiradical and Antimicrobial Properties of Red Grapes Extracts Obtained from Different Vitis vinifera Varieties", FOOD AND NUTRITION SCIENCES, Bd. 03, Nr. 10, 1. Oktober 2012 (2012-10-01), Seiten 1420-1432, XP055235393, ISSN: 2157-944X, DOI: 10.4236/fns.2012.310186**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft die Verwendung einer Wirkstoffzusammensetzung zur Bekämpfung von pilzlichen Pflanzenkrankheiten. Es handelt sich bei dieser Wirkstoffzusammensetzung um eine fungizide Mischung von Verbindungen in einer synergistisch wirksamen Menge. Die Erfindung betrifft des Weiteren die Verwendung einer Wirkstoffformulierung mit der Wirkstoffzusammensetzung zur Bekämpfung von pilzlichen Pflanzenkrankheiten. Darüber hinaus betrifft die Erfindung ein Verfahren zur Bekämpfung von pilzlichen Pflanzenkrankheiten.

Verbindungen aus der Gruppe der Flavan-3-ole und Stilbene und ihre Wirkung gegen Schadpilze sind grundsätzlich aus der Literatur bekannt, wie zum Beispiel aus Caruso et al. (2011) "Antifungal Activity of Resveratrol against Botrytis cinerea Is Improved Using 2-Furyl Derivatives" PLoS ONE 6(10): e25421.doi:10.1371/journal.pone.0025421; Albert et al. (2011) "Synthesis and antimicrobial activity of (E) stilbene derivatives", Bioorganic & Medicinal Chemistry 19 (2011) 5155-5166; Seppänen et al. (2004) "Antifungal activity of stilbenes in in vitro bioassays and in transgenic Populus expressing a gene encoding pinosylvin synthase", Plant Cell Reports 22: 584-593; sowie M. Wilmot: "Inhibition of Phytopathogenic Fungi on Selected Vegetable Crops by Catechins, Caffeine, Theanine and Extracts of Camellia sinensis (L.) O. Kuntze", Master Thesis, Faculty of Natural and Agricultural Sciences, University of Pretoria, 1. September 2006 (2006-09-01), Seiten 1 bis 132.

In der WO 2013/110258 A1 sind antifungale Formulierungen zur Bekämpfung von Pflanzenkrankheiten offenbart, die Wirkstoffe oder Wirkstoffzusammensetzungen aus polyphenolischen Extrakten der Wurzeln von Rheum-Arten und anderen polyphenolhaltigen Pflanzen enthalten. Die Extrakte können zum Beispiel Catechin, Epicatechingallat, Procyanidin, Rhaponticin, Piceatannolglucosid, Resveratrolglucosid und galloyliertes Trihydrostilbenglucosid enthalten.

Die JP 3 698745 B2 offenbart Zusammensetzungen zur Bekämpfung von Saprolegnia Funghi in Fischen, enthaltend Polyphenole, welche aus unterschiedlichen Teesorten extrahiert sind. Unter anderem ist ein Extrakt offenbart, welches 3,5 % Catechin, 14,8 % Gallocatechin, 11,6 % Gallocatechingallat, 7 % Epicatechin, 4,6 % Epicatechingallat, 15 % Epigallocatechingallat und 18 % Epigallocatechingallat enthält.

Aus der Druckschrift URSKA VRHOVSEK ET AL: "A Versatile Targeted Metabolomics Method for the Rapid Quantification of Multiple Classes of Phenolics in Fruits and Beverages", JOURNAL OF AGRICULTURAL AND FOOD CHEMISTRY, Bd. 60, Nr. 36, (2012-04-03), Seiten 8831-8840, XP055235155, DOI: 10.1021/jf2051569 ist die Verwendung von Wirkstoffen wie Resveratrol, Epigallocatechin und Gallocatechingallat gegen Candida albicans Funghi, einen die menschliche Haut befallenden Windelpilz, bekannt.

In der US 2010/015262 A1 sind Einzelverbindungen und Zusammensetzungen zur Vorsorge gegen Cellulites beschrieben, wobei zu der Gruppe von möglichen Verbindungen auch Resveratrol und Epigallocatechingallat zählen.

Die der vorliegenden Erfindung zugrunde liegende Aufgabe besteht darin, bei verringerter Gesamtmenge an auszubringenden Wirkstoffen eine verbesserte Wirkung gegen Schadpilze zu erreichen.

Die Aufgabe wird durch die Verwendung einer Wirkstoffzusammensetzung oder einer Wirkstoffformulierung mit den Merkmalen gemäß dem unabhängigen Patentanspruch 1 oder Patentanspruch 2 gelöst. Weiterbildungen sind in den abhängigen Patentansprüchen angegeben.

Im Hinblick auf eine Senkung der Aufwandmengen und eine Verbesserung des Wirkungsspektrums von bekannten Verbindungen, wie zum Beispiel galloylierten Flavan-3-olen und Stilbenen, liegen der vorliegenden Erfindung synergistische Mischungen zugrunde, die bei verringerter Gesamtmenge an ausgebrachten Wirkstoffen eine verbesserte Wirkung gegen Schadpilze aufweisen.

Neben den eingangs definierten Mischungen wurde außerdem gefunden, dass sich bei gleichzeitiger, und zwar gemeinsamer oder getrennter Anwendung der Verbindungen oder bei Anwendung der Verbindungen nacheinander Schadpilze besser bekämpfen lassen, als mit den Einzelverbindungen allein.

Die Mischungen aus galloylierten Flavan-3-olen und Stilbenen, gleichzeitig, gemeinsam oder getrennt angewandt, zeichnen sich durch eine hervorragende Wirkung gegen ein breites Spektrum von pflanzenpathogenen Pilzen, insbesondere aus der Klasse der Ascomyceten, Basidiomyceten, Phycomyceten und Deuteromyceten, aus.

Eine erfindungsgemäß verwendete Wirkstoffzusammensetzung zur Bekämpfung von Pflanzenkrankheiten besteht aus mindestens zwei verschiedenen Wirkstoffsubstanzen, ausgewählt aus den Kombinationen: Rhaponticin und Procyanidin, Epigallocatechin und Resveratrol, Trihydroxystilbenglucosid und Epigallocatechin oder Epigallocatechingallat und Gallocatechin.

Die mindestens zwei verschiedenen Wirkstoffsubstanzen sind dabei vorteilhaft in einem Verhältnis von 1:1 bis 1:8, vorzugsweise im Bereich von 1:1 bis 1:4, besonders bevorzugt in einem Bereich von 1:1 bis 1:2, einschließlich der Grenzverhältnisse, miteinander vermischt. Die Reihenfolge der aufgezählten Verbindungen ist hierbei nicht festgelegt, das heißt, der Bereich für das Verhältnis könnte dementsprechend auch mit 8:1, 4:1 oder 2:1 bis jeweils 1:1 beschrieben werden, wenn die Verbindung mit dem größeren Anteil zuerst genannt wird. Bei der Angabe der bevorzugten Bereiche für die Verhältnisse zwischen den Wirkstoffsubstanzen soll im Rahmen der Kurzbeschreibung der vorliegenden Erfindung und der Ansprüche die erste Zahl immer auf die Wirkstoffsubstanz mit dem geringeren Anteil und die zuletzt genannte Zahl immer auf die Wirkstoffsubstanz mit dem höheren Anteil in der Wirkstoffzusammensetzung bezogen sein, unabhängig davon, welche der Wirkstoffsubstanzen jeweils den geringeren oder den höheren Anteil bildet.

In der oben genannten Alternative der Erfindung besteht die Wirkstoffzusammensetzung aus mindestens zwei verschiedenen Flavan-3-olen in Form einer Kombination der zwei verschiedenen Flavan-3-ole Epigallocatechingallat und Gallocatechin.

In einer weiteren Ausführungsform der Erfindung besteht die Wirkstoffzusammensetzung aus mindestens einem Flavan-3-ol einerseits und mindestens einem Stilben andererseits in Form des Gemisches aus Epigallocatechingallat und Resveratrol (trans-3,5,4'-Trihydroxystilben).

Eine weitere besonders vorteilhafte Wirkstoffzusammensetzung besteht aus mindestens einem Proanthocyanidin oder einem Derivat eines Proanthocyanidins und mindestens einem Stilben in Form eines Gemisches aus Procyanidin B2 und Rhaponticin.

Beim Einsatz der erfindungsgemäß verwendeten Wirkstoffkombination können die Aufwandmengen je nach Applikationsart innerhalb eines größeren Bereichs variiert werden. Bei der Behandlung von Pflanzenteilen liegen die Aufwandmengen an Wirkstoffkombination im Allgemeinen zwischen 0,1 und 10 000 g/ha, vorzugsweise zwischen 10 und 1000 g/ha (g/ha = Gramm pro Hektar).

Die in der Zusammensetzung enthaltene Wirkstoffkombination kann als solche, in Form ihrer Formulierungen oder den daraus bereiteten Anwendungsformen, wie gebrauchsfertige Lösungen, emulgierbare Konzentrate, Emulsionen, Suspensionen, Spritzpulver, lösliche Pulver und Granulate, angewendet werden. Ein weiterer Aspekt der vorliegenden Erfindung betrifft daher eine Wirkstoffformulierung, bestehend aus einer gebrauchsfertigen Lösung, einem emulgierbaren Konzentrat, einer Emulsion, einer Suspension, einem Spritzpulver, einem löslichen Pulver und oder einem Granulat der oben genannten Wirkstoffzusammensetzung und gegebenenfalls weiteren Hilfsstoffen, insbesondere Adjuvantien. Die Konzentration der Wirkstoffe in der Wirkstoffformulierung beträgt in der Regel zwischen 4 und 2000 ppm, vorzugsweise zwischen 8 und 500 ppm.

Als Lösungsmittel dient bevorzugt Wasser, gegebenenfalls mit Beimischungen von weiteren Lösungsmitteln, beispielsweise Ethanol.

Die oben genannte Wirkstoffzusammensetzung bzw. die oben genannte Wirkstoffformulierung wird zur Bekämpfung von pilzlichen Pflanzenkrankheiten verwendet, wobei zu den zu bekämpfenden phytopathogenen Pilzen ein oder mehrere phytopathogene Pilze gehören.

Ein weiterer Aspekt der Erfindung betrifft ein Verfahren zur Bekämpfung von pilzlichen Pflanzenkrankheiten, bei dem mindestens zwei verschiedene Wirkstoffsubstanzen, ausgewählt aus den Kombinationen: Rhaponticin und Procyanidin, Epigallocatechin und Resveratrol, Trihydroxystilbenglucosid und Epigallocatechin oder Epigallocatechingallat und Gallocatechin gleichzeitig, und zwar gemeinsam oder getrennt oder nacheinander als solche oder in ihren Formulierungen mit einer Konzentration zwischen 4 und 2000 ppm auf eine zu behandelnde Pflanze aufgebracht werden. Die Reihenfolge bei getrennter Applikation hat im Allgemeinen keine Auswirkung auf den Bekämpfungserfolg. Sofern für Pflanzen pathogene Schadpilze zu bekämpfen sind, erfolgt eine getrennte oder gemeinsame Applikation beispielsweise einer ersten Verbindung I und einer zweiten Verbindung II oder der Böden vor oder nach der Aussaat der Pflanzen oder vor oder nach Auflaufen der Pflanzen. Die erfindungsgemäßen fungiziden synergistischen Mischungen, können vorteilhaft in Form von direkt versprühbaren Lösungen, Pulvern und Suspensionen oder in Form von hochprozentigen wässrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck, sie soll in jedem Fall eine möglichst feine und gleichmäßige Verteilung der erfindungsgemäßen Mischung gewährleisten.

Die Formulierungen werden in an sich bekannter Weise hergestellt, zum Beispiel durch Zugabe von Lösungsmitteln und/oder Träger-Stoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, zum Beispiel Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanole oder von Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid-Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver, Streu- und Stäubemittel können durch Mischen oder gemeinsames Vermahlen der Verbindungen I oder II oder der Mischung aus den Verbindungen I und II mit einem festen Trägerstoff hergestellt werden. Granulate, zum Beispiel Umhüllungs-, Imprägnierungs- oder Homogengranulate, werden üblicherweise durch Bindung des Wirkstoffs oder der Wirkstoffe an einen festen Trägerstoff hergestellt.

Als Füllstoffe beziehungsweise feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nussschalenmehl, Cellulosepulver oder andere feste Trägerstoffe.

Die Formulierungen enthalten im Allgemeinen 0,1 bis 95 Gew.-%, vorzugsweise 0,5 bis 90 Gew.-% einer der Verbindungen I oder II beziehungsweise der Mischung aus den Verbindungen I und II. Die Wirkstoffe werden dabei in einer Reinheit von 90 % bis 100 %, vorzugsweise 95 % bis 100 %, ermittelt durch ein NMR- oder HPLC-Spektrum, eingesetzt.

Die Anwendung kann vor und/oder nach dem Befall durch die Schadpilze erfolgen.

Die Wirkstoffsubstanzen als solche oder deren Formulierungen können auch in Mischung, das heißt gleichzeitig, vor oder danach, mit weiteren Fungiziden, Bakteriziden, Akariziden, Nematiziden, Insektiziden und/oder weiteren Wirkstoffen, wie Herbiziden, und/oder mit Düngemitteln und/oder Wachstumsregulatoren aufgetragen werden. Beim Einsatz der erfindungsgemäßen Wirkstoffkombination können die Aufwandmengen je nach Applikationsart innerhalb eines größeren Bereichs variiert werden. Bei der Behandlung von Pflanzenteilen liegen die Aufwandmengen an Wirkstoffkombination im Allgemeinen zwischen 4 und 2000 ppm, vorzugsweise zwischen 8 und 500 ppm.

Besondere Bedeutung haben die erfindungsgemäßen Wirkstoffzusammensetzungen und Formulierungen für die Bekämpfung einer Vielzahl von Pilzen an verschiedenen Kulturpflanzen wie Gerste, Weizen, Hafer, Roggen, Mais, Reis, Baumwolle, Gemüsepflanzen, wie zum Beispiel Gurken, Bohnen, Tomaten, Kartoffeln und Kürbisgewächse, sowie Bananen, Kaffee, Obstpflanzen, Soja, Reben, Zierpflanzen oder Zuckerrohr.

Insbesondere eignen sich die erfindungsgemäßen Wirkstoffzusammensetzungen und Formulierungen zur Bekämpfung der folgenden pflanzenpathogenen Pilze oder Erreger: *Erysiphe graminis* (echter Mehltau) an Getreide, *Erysiphe cichoracearum* und *Sphaerotheca fuliginea* an Kürbisgewächsen, *Podosphaera leucotricha* an Äpfeln, *Uncinula necator* an Reben, *Puccinia-Arten* an Getreide und Soja, *Rhizoctonia-Arten* an Baumwolle, Reis und Rasen, *Ustilago-Arten* an Getreide und Zuckerrohr, *Venturia inaequalis* (Schorf) an Äpfeln, *Helminthosporium-Arten* an Getreide, *Septoria nodorum* an Weizen, *Botrytis cinera* (Grauschimmel) an Erdbeeren, Gemüse, Zierpflanzen und Reben, *Cercospora arachidicola* an Erdnüssen, *Pseudocercosporella herpotrichoides* an Weizen und Gerste, *Pyricularia oryzae* an Reis, *Phytophthora infestans* an Kartoffeln oder Tomaten, *Phytophthora capsici* an Tomaten oder Paprika, *Plasmopara viticola* an Reben, *Pseudocercosporella*-Arten in Hopfen und Gurken, *Alternaria-Arten* an Gemüse und Obst, *Mycosphaerella-Arten* in Bananen, *Sclerotinia sclerotiorum* an Raps und Gemüse sowie *Fusarium-* und *Verticillium-Arten* an verschiedenen Kulturpflanzen.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen:

**Figur 1:** die bekannte allgemeine Strukturformel der Flavan-3-ole,

**Figur 2:** die bekannte Strukturformel von Procyanidin B2,

**Figur 3:** die bekannte Strukturformel von Procyanidin B5,

**Figur 4:** die bekannte Strukturformel von Procyanidin A1,

**Figur 5:** die bekannte Grundstrukturformel von Stilbenen als trans-Isomer und als cis-Isomer,

**Figur 6:** Beispiele für bekannte Stilbenderivate,

**Figur 7:** eine graphische Darstellung der fungiziden Wirkung einer Mischung aus Rhaponticin und Procyanidin B2,

**Figur 8:** eine graphische Darstellung der fungiziden Wirkung einer Mischung aus Epigallocatechingallat und Resveratrol,

**Figur 9:** eine graphische Darstellung der fungiziden Wirkung einer Mischung aus Epigallocatechingallat und Trihydroxy-Stilbenglucosid und

**Figur 10:** eine graphische Darstellung der fungiziden Wirkung einer Mischung aus Gallocatechin und Epigallocatechingallat.

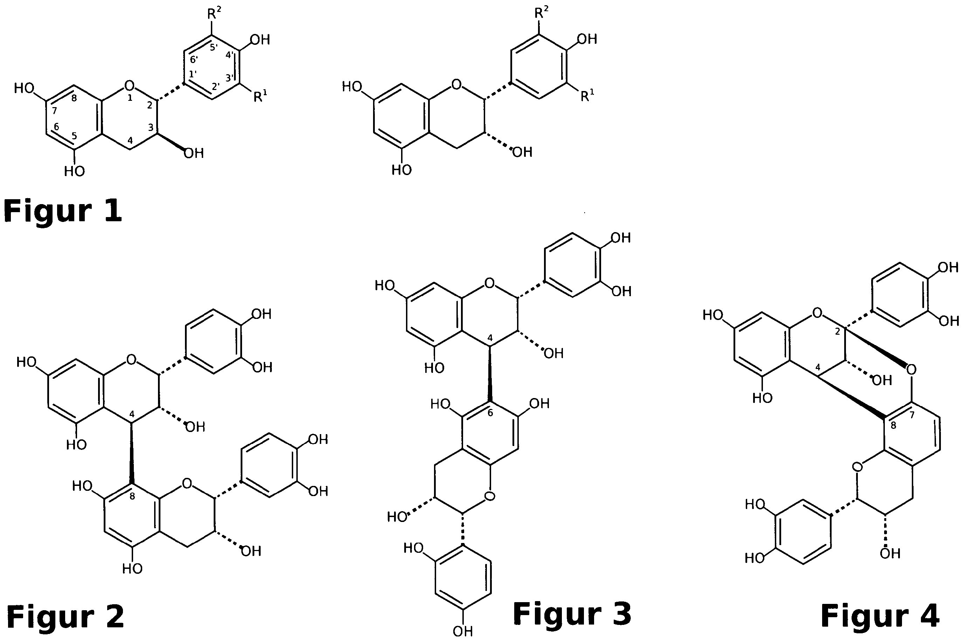

Flavan-3-ole sind Verbindungen mit der in der **Figur 1** gezeigten bekannten Grundstruktur. Wichtige Vertreter dieser Verbindungen sind im Folgenden mit der entsprechenden Zuordnung Reste $R^1$ und $R^2$ der Strukturformel bei-

spielhaft aufgeführt:

R¹ = H; R² = H:    Afzelechin
R¹ = H; R² = H:    Epiafzelechin
R¹ = OH; R² = H:    Catechin
R¹ = OH; R² = H:    Epicatechin
R¹ = OH; R² = OH:    Gallocatechin
R¹ = OH; R² = OH:    Epigallocatechin

Proanthocyanidine sind Verbindungen, die aus Flavan-3-ol-Einheiten aufgebaut sind, die miteinander verknüpft sind. Nachfolgend sind verschiedene Verknüpfungstypen dargestellt. Ein Vertreter der Proanthocyanidine ist das als Procyanidin B2 bezeichnete Epicatechin-(4ß→8)-epicatechin, welches in **Figur 2** gezeigt ist. Weitere Proanthocyanidine sind die als Procyanidin B5 5 bezeichnete Verbindung Epicatechin-(4ß→6)-Epicatechin mit der in der **Figur 3** gezeigten Strukturformel sowie das als Procyanidin A1 bezeichnete Epicatechin-(4ß-→8,2ß-→7)-catechin mit der in der **Figur 4** gezeigten Strukturformel.

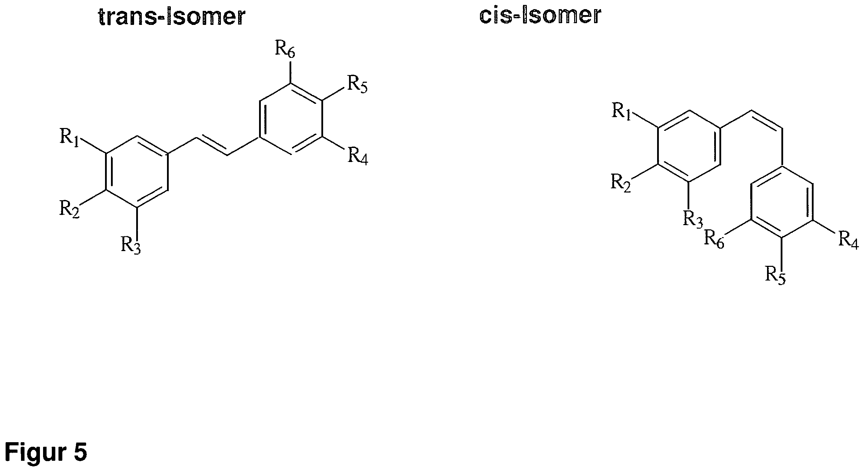

Die **Figur 5** zeigt die Grundstrukturformel von Stilbenen als trans-Isomer und als cis-Isomer. Die Tabelle 1 für verschiedene Stilbene die entsprechenden Reste R1 bis R6.

**Tabelle 1**

| Stilbene | R1 | R2 | R3 | R4 | R5 | R6 |
|---|---|---|---|---|---|---|
| Resveratrol | OH | H | OH | H | OH | H |
| Piceid = 3,5,4'-Trihydroxy-stilben-3-O-ß-D-glucosid | Glucose | H | OH | H | OH | H |
| Astringin (3'-OH-Piceid) | Glucose | H | OH | OH | OH | H |
| Piceatannol = 3,3',4',5-Tetrahydroxystilben | OH | OH | H | OH | H | OH |
| Pterostilben | OCH₃ | H | OCH₃ | H | OH | H |
| Resveratrolosid | OH | H | OH | H | Glucose | H |

In Tabelle 2 sind für verschiedene Stilbenderivate die Reste R1, R2 und R3 aufgeführt.

**Tabelle 2**

| Name der Verbindung | R1 am C-3 | R2 am C-4' | R3 am C-3' |
|---|---|---|---|
| 3,5,4'-Trihydroxy-stilben-4'-O-ß-D-glucosid | H | Glucose | H |
| 3,5,4'-Trihydroxy-stilben-4'-O-ß-D-(6"-O-galloyl)-glucosid | H | 6-O-Galloylglucose | H |
| Rhapontigenin-3'-Q-ß-D-glucoyranosid | H | CH₃ | O-Glucose |
| Rhaponticin-6"-O-gallat | 6-O-Galloylglucose | CH₃ | OH |
| Rhaponticin-2"-O-gallat | 2-O-Galloylglucose | CH₃ | OH |
| Rhaponticin-2"-O-coumarat | 2-O-Coumaroylglucose | CH₃ | OH |
| Piceatannol-3-O-ß-D-glucopyranosid | Glucose | H | OH |
| Piceatannol-3'-O-ß-D-glucopyranosid | H | H | O-Glucose |
| Piceatannol-3'-O-ß-D-xylopyranosid | H | H | O-Xylose |
| Piceatannol-3'-O-ß-D-(6"-O-galloyl)-glucopyranosid | H | H | O-(6-galloyl)-glucose |
| Desoxyrhaponticin-6"-O-gallat | 6-O-Galloylglucose | CH₃ | H |

(fortgesetzt)

| Name der Verbindung | R1 am C-3 | R2 am C-4' | R3 am C-3' |
|---|---|---|---|
| 3,4',5-Trihydroxy-stilben-4'-O-ß-D-(6"-O-galloyl)-glucosid | H | 6-Galloylglucose | H |

Die Tabelle 3 führt für das Stilben Rhaponticin und für Rhaponticinderivate die entsprechenden Reste R1, R2 und R3 auf.

**Tabelle 3**

| Name der Verbindung | R1 am C-3 | R2 am C-4' |
|---|---|---|
| Rhaponticin | Glucose | $CH_3$ |
| Rhapontigenin | H | $CH_3$ |
| Desoxyrhaponticin | Glucose | $CH_3$ |
| Desoxyrhapontigenin | H | $CH_3$ |
| Dioxyrhaponticin | Glucose | OH |

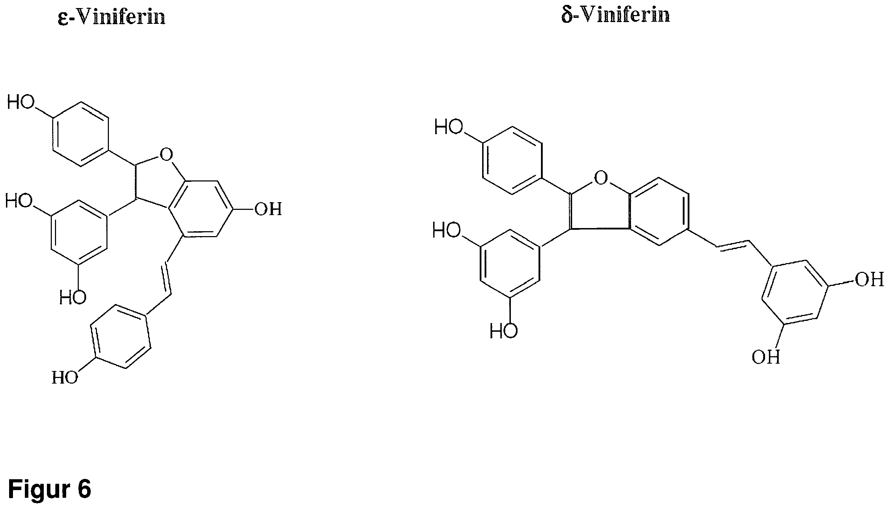

Die **Figur 6** zeigt als Beispiele für Stilbenderivate die Strukturformeln der Resveratrol-Dimere e-Viniferin und d-Viniferin.

Material und Methoden

Gerstenpflanzen (3 Pflanzen/Gefäß) wurden drei Wochen in Frustorfer Erde kultiviert. Die Inokulation der Blätter mit Mehltau erfolgte 2 Stunden nach der Applikation der Versuchspräparate (protektive Anwendung). Für die Inokulation wurden frische Konidien von *Blumeria graminis* f. sp. *hordel* verwendet, Rasse A6, und im Mehltau-Turm durch Windverteilung auf die Blätter gebracht. Es wurden für einen Blattsegmenttest 10 cm lange Blattsegmente, beginnend von der Halmbasis, abgeschnitten und je 15 Blätter des jüngsten sowie zweitjüngsten Blattes auf Benzimidazolagar ausgelegt. Das Benzimidazolagar besteht aus 0,5 % Agar und Zumischung von 40 ppm Benzimidazol in einem Liter Wasser.

Die Konzentration der Standardsubstanzen für die Blattapplikation wurde auf 125, 62,5, 32, 16 und 8 ppm eingestellt. Den Standardsubstanzen wurde mit BT S240 ein Adjuvans zugemischt (50ml/ha), um eine gleichmäßige Verteilung der Applikationslösung auf dem Blatt sicher zu stellen. Die Auswertung der Mehltauwirkung erfolgte durch Auszählung der Mehltaupusteln pro Blatt auf 7 cm Blattlänge.

Die gute fungizide Wirkung der erfindungsgemäßen Wirkstoffkombination geht aus den nachfolgenden Beispielen hervor. Während die einzelnen Wirkstoffe in der fungiziden Wirkung Schwächen aufweisen, zeigen die Kombinationen aus zwei Wirkstoffen eine Wirkung, die über eine einfache Wirkungssummierung hinausgeht.

Ein synergistischer Effekt liegt bei Fungiziden/antifungalen Verbindungen immer dann vor, wenn die fungizide Wirkung der Wirkstoffkombination größer ist als die Summe der Wirkungen der einzeln applizierten Wirkstoffe.

Die zu erwartende Wirkung für eine gegebene Kombination von zwei oder drei Wirkstoffen kann nach S.R. Colby ("Calculating Synergistic and Antagonistic Responses of Herbicide Combinations", Weeds 1967, 15, 20-22) wie folgt berechnet werden:

$$E_1 = X + Y - \frac{X \cdot Y}{100} \quad ,$$

oder bei Einsatz von drei Wirkstoffen

$$E_1 = X + Y + Z - \frac{X \cdot Y \cdot Z}{100}$$

wobei

X    den Wirkungsgrad beim Einsatz des Wirkstoffes A in einer Aufwandmenge von m g/ha bedeutet,

Y      den Wirkungsgrad beim Einsatz des Wirkstoffes B in einer Aufwandmenge von n g/ha bedeutet,

Z      den Wirkungsgrad beim Einsatz des Wirkstoffes C in einer Aufwandmenge von r g/ha bedeutet,

E1     den Wirkungsgrad beim Einsatz der Wirkstoffe A und B in Aufwandmengen von m und n g/ha bedeutet und

E2     den Wirkungsgrad beim Einsatz der Wirkstoffe A und B und C in Aufwandmengen von m und n und r g/ha bedeutet.

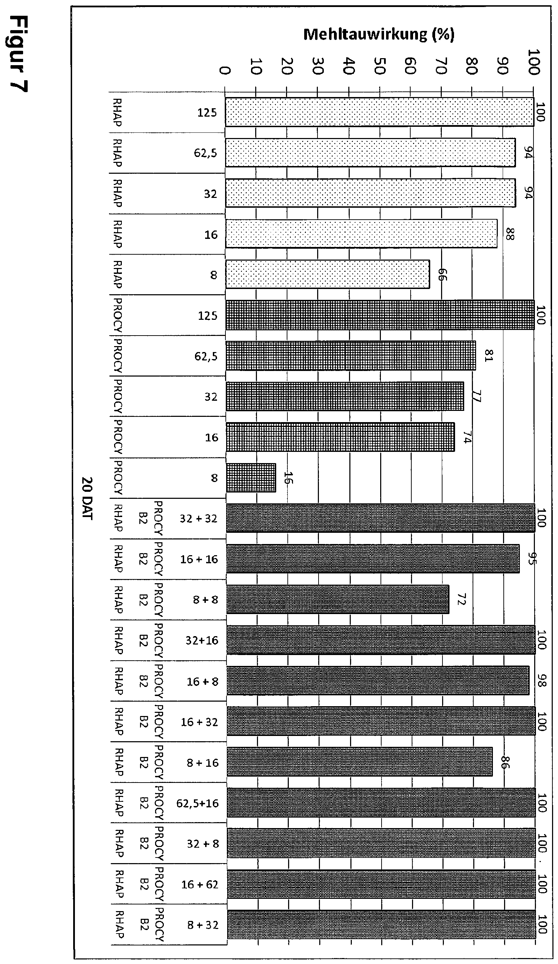

Die Ergebnisse der Wirksamkeit gegen Gerstenmehltau (*Blumeria graminis* f. sp. *Hordei*) zeigen in bestimmten Mischungsverhältnissen eine synergistische Wirkung, wie in den nachfolgenden Tabellen zu sehen. In Tabelle 1 sind die Wirkungsgrade, die für Mischungen aus dem Stilben-Glucosid Rhaponticin (RHAP) als Stilbenderivat und Procyanidin B2 (PROCY) anhand der bekannten Wirkung der Einzelsubstanzen berechnet wurden, den beobachteten Wirkungsgraden gegenübergestellt. Die konzentrationsabhängigen Wirkungsgrade für die Einzelsubstanzen und die Mischungen sind in **Figur 7** grafisch dargestellt. Die Bezugsgröße 100 für den Wirkungsgrad ist in diesem und in den folgenden Beispielen die Wirkung, die durch eine Konzentration von 125 ppm der jeweiligen Reinsubstanz erzielt wird. Die Tabelle 4 und die **Figur 7** zeigen, dass in fast allen der verwendeten Mischungsverhältnisse ein Synergieeffekt, wie oben beschrieben, beobachtet werden konnte. Das heißt, bei Einsatz der Mischungen werden die berechneten Wirkungsgrade der Einzelsubstanzen übertroffen.

**Tabelle 4**

| Beispiel | Erfindungsgemäße Mischung | Beobachteter Wirkungsgrad | Berechneter Wirkungsgrad |
|---|---|---|---|
| 1 | Kontrolle (unbehandelt) | (100 % Befall) | 0 |
| 2 | RHAP + PROCY (16 + 16 ppm) | 100 | 96 |
| 3 | RHAP + PROCY (8 + 8 ppm) | 72 | 45 |
| 4 | RHAP + PROCY (32 + 16 ppm) | 100 | 98 |
| 5 | RHAP + PROCY (16+ 8 ppm) | 98 | 90 |
| 6 | RHAP + PROCY (16+ 32 ppm) | 100 | 97 |
| 7 | RHAP + PROCY (8 + 16 ppm) | 86 | 91 |
| 8 | RHAP + PROCY (62,5 + 16 ppm) | 100 | 98 |
| 9 | RHAP + PROCY (16+ 62,5 ppm) | 100 | 97 |
| 10 | RHAP + PROCY (8+ 32 ppm) | 100 | 92 |

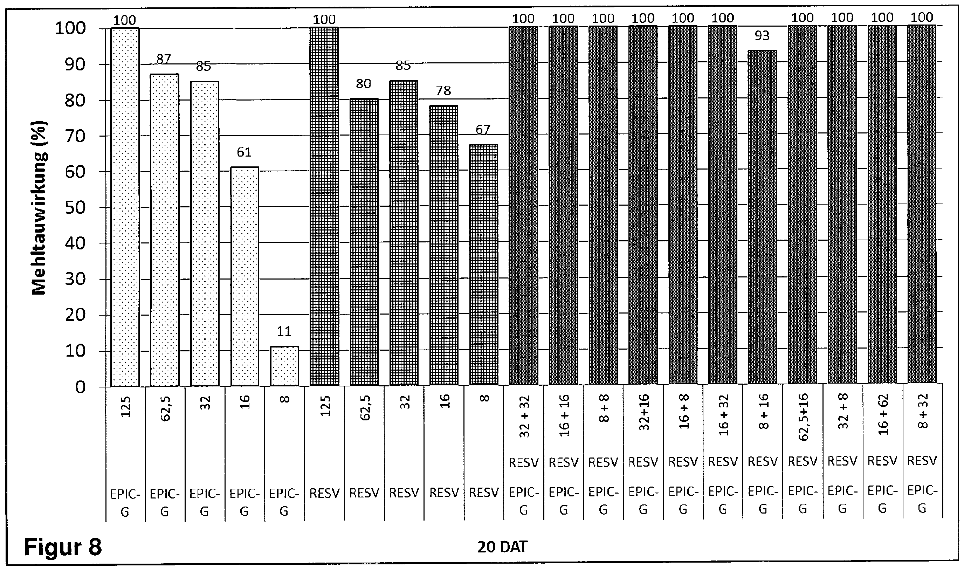

In Tabelle 5 sind die Wirkungsgrade, die für Mischungen aus Epigallocatechingallat (EPIC-G) als Flavan-3-ol und Resveratrol (RESV) als Stilben mit der systematischen Bezeichnung trans-3,5,4'-Trihydroxystilben berechnet wurden, den beobachteten Wirkungsgraden gegenübergestellt. Die konzentrationsabhängigen Wirkungsgrade für die verwendeten Einzelsubstanzen und die Mischungen sind in **Figur 8** grafisch dargestellt. Die Tabelle 5 und die **Figur 8** zeigen, dass in allen der verwendeten Mischungsverhältnisse ein Synergieeffekt, wie oben beschrieben, beobachtet werden konnte. Das heißt, bei Einsatz der Mischungen werden die berechneten Wirkungsgrade in allen Fällen übertroffen.

**Tabelle 5**

| Beispiel | Erfindungsgemäße Mischung | Beobachteter Wirkungsgrad | Berechneter Wirkungsgrad |
|---|---|---|---|
| 1 | Kontrolle (unbehandelt) | (100 % Befall) | 0 |
| 2 | EPIC-G + RESV (16 + 16 ppm) | 100 | 91 |
| 3 | EPIC-G + RESV (8 + 8 ppm) | 100 | 71 |
| 4 | EPIC-G + RESV (32 + 16 ppm) | 100 | 97 |
| 5 | EPIC-G + RESV (16+ 8 ppm) | 100 | 87 |
| 6 | EPIC-G + RESV (16+ 32 ppm) | 100 | 94 |
| 7 | EPIC-G + RESV (8 + 16 ppm) | 93 | 80 |
| 8 | EPIC-G + RESV (62,5 + 16 ppm) | 100 | 98 |
| 9 | EPIC-G + RESV (16+ 62,5 ppm) | 100 | 92 |

(fortgesetzt)

| Beispiel | Erfindungsgemäße Mischung | Beobachteter Wirkungsgrad | Berechneter Wirkungsgrad |
|---|---|---|---|
| 10 | EPIC-G + RESV (8+ 32 ppm) | 100 | 87 |

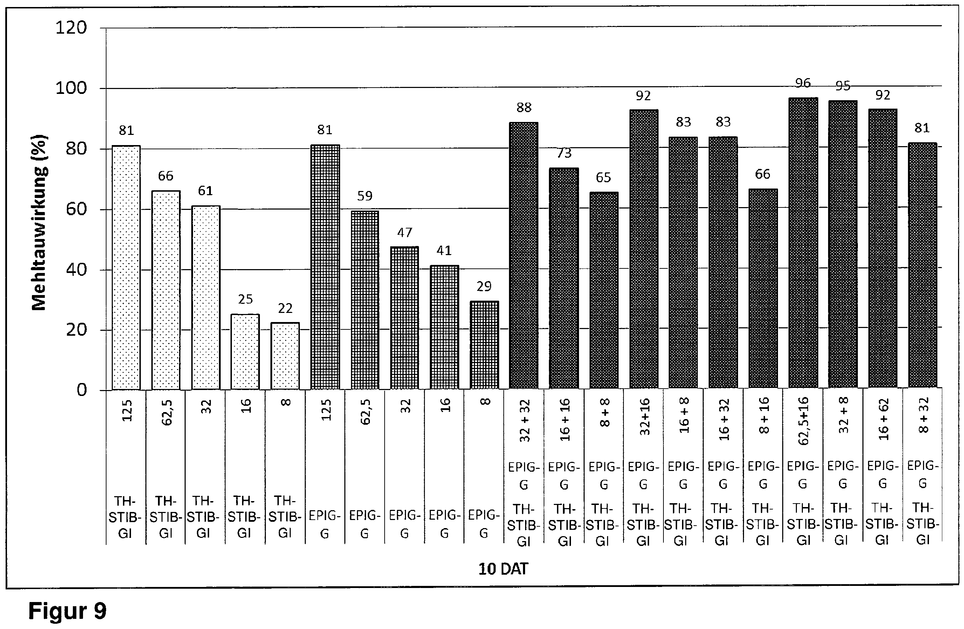

In Tabelle 6 sind die Wirkungsgrade, die für Mischungen aus Epigallocatechingallat (EPIC-G) als Flavan-3-ol und Trihydroxystilbenglucosid (TH-STIB-GI) als Stilben berechnet wurden, den beobachteten Wirkungsgraden gegenübergestellt. Die konzentrationsabhängigen Wirkungsgrade für die verwendeten Einzelsubstanzen und die Mischungen sind in **Figur 9** grafisch dargestellt. Die Tabelle 6 und die **Figur 9** zeigen, dass in allen der verwendeten Mischungsverhältnisse ein Synergieeffekt, wie oben beschrieben, beobachtet werden konnte.

**Tabelle 6**

| Beispiel | Erfindungsgemäße Mischung | Beobachteter Wirkungsgrad | Berechneter Wirkungsgrad |
|---|---|---|---|
| 1 | Kontrolle (unbehandelt) | (100% Befall) | 0 |
| 2 | TH-STIB-GI+EPIC-G (16+16 ppm) | 73 | 56 |
| 3 | TH-STIB-GI+EPIC-G (8+8 ppm) | 65 | 45 |
| 4 | TH-STIB-GI+EPIC-G (32+16 ppm) | 92 | 77 |
| 5 | TH-STIB-GI+EPIC-G (16+8 ppm) | 83 | 67 |
| 6 | TH-STIB-GI+EPIC-G (16+32 ppm) | 83 | 60 |
| 7 | TH-STIB-GI+EPIC-G (8+16 ppm) | 66 | 54 |
| 8 | TH-STIB-GI+EPIC-G (62,5+16 ppm) | 96 | 80 |
| 9 | TH-STIB-GI+EPIC-G (16+62,5 ppm) | 92 | 69 |
| 10 | TH-STIB-GI+EPIC-G (8+32 ppm) | 81 | 74 |

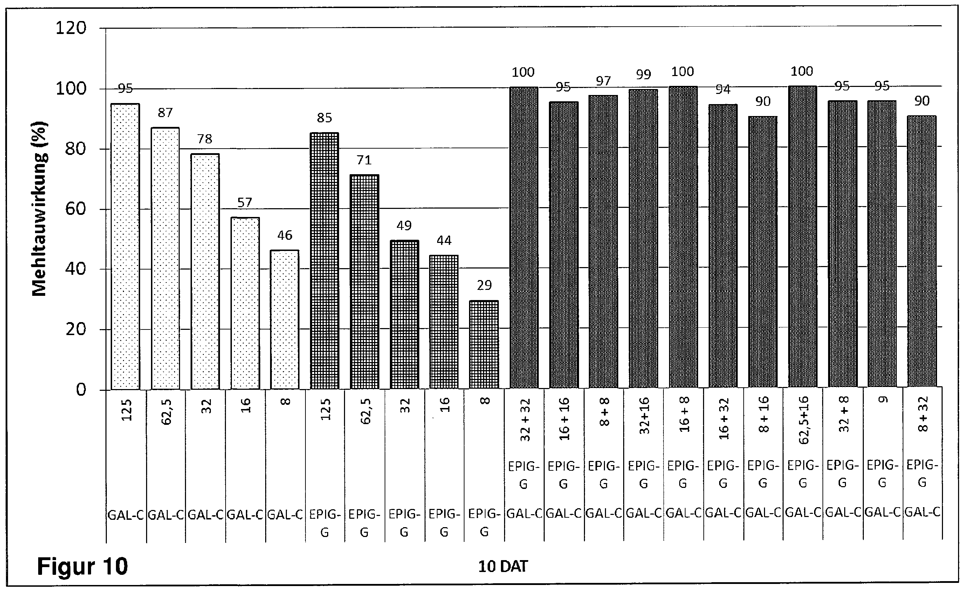

In Tabelle 7 sind die Wirkungsgrade, die für Mischungen aus Gallocatechin (GAL-C) als Flavan-3-ol und Epigallocatechingallat (EPIC-G) als weiteres Flavan-3-ol berechnet wurden, den beobachteten Wirkungsgraden gegenübergestellt. Die konzentrationsabhängigen Wirkungsgrade für die verwendeten Einzelsubstanzen und die Mischungen sind in **Figur 10** grafisch dargestellt. Die Tabelle 7 und die **Figur 10** zeigen, dass in allen der verwendeten Mischungsverhältnisse ein Synergieeffekt, wie oben beschrieben, beobachtet werden konnte.

**Tabelle 7**

| Beispiel | Erfindungsgemäße Mischung | Beobachteter Wirkungsgrad | Berechneter Wirkungsgrad |
|---|---|---|---|
| 1 | Kontrolle (unbehandelt) | (100 % Befa | 0 |
| 2 | GAL-C + EPIC-G (16 + 16 ppm) | 95 | 76 |
| 3 | GAL-C +EPIC-G (8 + 8 ppm) | 97 | 62 |
| 4 | GAL-C +EPIC-G (32 + 16 ppm) | 99 | 88 |
| 5 | *GAL-C +EPIC-G (16+ 8 ppm)* | 100 | 69 |
| 6 | GAL-C +EPIC-G + (16+ 32 ppm) | 94 | 78 |
| 7 | GAL-C +EPIC-G + (8 + 16 ppm) | 90 | 70 |
| 8 | GAL-C +EPIC-G + (62,5 + 16 ppm) | 100 | 93 |
| 9 | GAL-C +EPIC-G + (16+ 62,5 ppm) | 95 | 88 |
| 10 | GAL-C +EPIC-G + (8+ 32 ppm) | 90 | 72 |

Die gute fungizide Wirkung der erfindungsgemäßen Wirkstoffkombination gegen Haferkronenrost (*Puccinia coronata*) geht aus den nachfolgenden Beispielen hervor. Während die einzelnen Wirkstoffe in der fungiziden Wirkung Schwächen aufweisen, zeigen die jeweiligen Kombinationen eine Wirkung, die über eine einfache Wirkungssummierung hinausgeht. Die Ergebnisse der Wirksamkeit gegen Haferkronenrost (*Puccinia coronata*) zeigen, wie nachfolgende Tabellen zeigen, in bestimmten Mischungsverhältnissen eine synergistische Wirkung.

Rhaponticin (= RHAP) und Procyanidin B2 (= PROCY) bzw. Epigallocatechingallat (= EPIC-G) und Resveratrol (= RESV) wurden auch gegen Haferkronenrost (*Puccinia coronata*) in unterschiedlichen Konzentrationen getestet, siehe die **Tabelle 8** und die **Tabelle 9.** Hafer wurde drei Wochen in Frustorfer Erde kultiviert. Den Standardsubstanzen wurde mit BT S240 ein Adjuvans zugemischt (50ml/ha), um eine gleichmäßige Verteilung der Applikationslösung auf dem Blatt sicher zu stellen. Die Inokulation der Blätter mit Haferkronenrost erfolgte 8 Stunden nach der Applikation mit den Standardsubstanzen (protektive Anwendung). Für die Applikation wurden Uredosporen von Haferkronenrost (*Puccinia coronata*) in ein Medium aufgenommen, das aus einer Mischung von Methyl nonafluoroisobutyl Ether und Methyl nonafluorobutyl Ether bestand. Bei dieser Mischung evaporiert das Medium nach der Applikation auf die Blätter sehr schnell und die vorher mit dem Medium verteilten Rostsporen bleiben auf der Blattoberfläche zurück. Nach der Applikation mit diesem Medium wurden die Pflanzen im Dunkeln für 24 h inkubiert und danach im Blattsegmenttest ausgelegt. Es wurden für einen Blattsegmenttest 10 cm lange Blattsegmente, beginnend von der Halmbasis, abgeschnitten und je 15 Blätter des jüngsten sowie zweitjüngsten Blattes auf Benzimidazolagar ausgelegt (0,5 % Agar, Zumischung von 40 ppm Benzimidazol nach dem Autoklavieren) Die Auswertung der Wirkung gegen Haferkronenrost erfolgte durch Auszählung der Rostpusteln pro Blatt auf 7 cm Blattlänge. Die Bonitierung erfolgte nach 20 DAT (Days after treatment). Die synergistische Wirkung wurde wiederum nach der Colby-Formel berechnet.

Bei der Prüfung der synergistischen Wirkung gegen Rostkrankheiten wurde Haferkronenrost (*Puccinia coronata*) als Modell gewählt, um aufzuzeigen, dass neben Mehltau-Krankheiten auch Rostkrankheiten von den erfindungsgemäßen Verbindungen in synergistischer Weise kontrolliert werden. Zu wichtigen Rostkrankheiten zählen u.a. wichtige Rostkrankheiten in Getreide wie Gelbrost (*Puccinia striiformis*), Braunrost (*Puccinia recondita*), Zwergrost (*Puccinia hordei*) oder Schwarzrost (*Puccinia graminis*). Wichtige andere Rostkrankheiten finden sich in Soja (*Phakopsora pachyrhizi*) oder bei Rosen, Birnen, Rasengräsern.

**Tabelle 8**

| Beispiel | Erfindungsgemäße Mischung | Beobachteter Wirkungsgrad | Berechneter Wirkungsgrad |
|---|---|---|---|
| 1 | Kontrolle (unbehandelt) | (100 % Befall) | 0 |
| 2 | RHAP + PROCY (62,5 + 62,5 ppm) | 86 | 74 |
| 3 | RHAP + PROCY (32 + 32 ppm | 75 | 62 |
| 4 | RHAP + PROCY (16 + 16 ppm) | 64 | 45 |
| 5 | RHAP + PROCY (62,5 + 32 ppm) | 84 | 70 |
| 6 | RHAP + PROCY (32+ 16 ppm) | 73 | 52 |
| 7 | RHAP + PROCY (32+ 62,5 ppm) | 81 | 68 |
| 8 | RHAP + PROCY (16 + 32 ppm) | 73 | 58 |
| 9 | RHAP + PROCY (125 + 32 ppm) | 90 | 77 |
| 10 | RHAP + PROCY 32+ 125 ppm) | 87 | 73 |
| 11 | RHAP + PROCY 16+ 62,5 ppm) | 77 | 63 |

**Tabelle 9**

| Beispiel | Erfindungsgemäße Mischung | Beobachteter Wirkungsgrad | Berechneter Wirkunqsgrad |
|---|---|---|---|
| 1 | Kontrolle (unbehandelt) | (100 % Befall) | 0 |
| 2 | EPIC-G + RESV (62,5 + 62,5 ppm) | 96 | 86 |
| 3 | EPIC-G + RESV (32 + 32 ppm) | 92 | 78 |
| 4 | EPIC-G + RESV (16 + 16 ppm) | 72 | 54 |
| 5 | EPIC-G + RESV (62,5 + 32 ppm) | 92 | 84 |
| 6 | EPIC-G + RESV (32+ 16 ppm) | 83 | 71 |
| 7 | EPIC-G + RESV (32+ 62,5 ppm) | 93 | 81 |

(fortgesetzt)

| Beispiel | Erfindungsgemäße Mischung | Beobachteter Wirkungsgrad | Berechneter Wirkunqsqrad |
|---|---|---|---|
| 8 | EPIC-G + RESV (62,5 + 16 ppm) | 84 | 72 |
| 9 | EPIC-G + RESV (16 + 62,5 ppm) | 83 | 69 |

**Abkürzungsliste**

| | |
|---|---|
| EPIC-G | Epigallocatechingallat |
| GAL-C | Gallocatechin |
| PROCY | Procyanidin |
| RESV | Resveratrol (trans-3,5,4'-Trihydroxystilben) |
| RHAP | Rhaponticin |
| TH-STIB-GI | Trihydroxystilbenglucosid; 3,4',5-Trihydroxystilben-3-O-beta-D-glucopyranosid |

**Patentansprüche**

1. Verwendung einer Wirkstoffzusammensetzung oder einer Wirkstoffformulierung zur Bekämpfung von pilzlichen Pflanzenkrankheiten, wobei zu den zu bekämpfenden phytopathogenen Pilzen ein oder mehrere phytopathogene Pilze gehören und wobei die Wirkstoffzusammensetzung aus mindestens zwei verschiedenen Wirkstoffsubstanzen besteht, ausgewählt aus der Gruppe der Stilbene einerseits und aus der Gruppe der galloylierten Flavan-3-ole und/oder aus der Gruppe der Proanthocyanidine andererseits, wobei die mindestens zwei verschiedenen Wirkstoffsubstanzen Rhaponticin + Procyanidin oder Epigallocatechin + Resveratrol oder Trihydroxystilbenglucosid + Epigallocatechin sind und in einem Gewichtsverhältnis von 1:1 bis 1:8 miteinander vermischt sind und wobei die Wirkstoffformulierung aus einer gebrauchsfertigen Lösung, einem emulgierbaren Konzentrat, einer Emulsion, einer Suspension, einem Spritzpulver, einem löslichen Pulver und oder einem Granulat einer entsprechenden Wirkstoffzusammensetzung und gegebenenfalls weiteren Hilfsstoffen, insbesondere Adjuvantien, besteht.

2. Verwendung einer Wirkstoffzusammensetzung oder einer Wirkstoffformulierung zur Bekämpfung von pilzlichen Pflanzenkrankheiten, wobei zu den zu bekämpfenden phytopathogenen Pilzen ein oder mehrere phytopathogene Pilze gehören und wobei die Wirkstoffzusammensetzung aus mindestens zwei verschiedenen Wirkstoffsubstanzen besteht, ausgewählt aus der Gruppe der galloylierten Flavan-3-ole, wobei die mindestens zwei verschiedenen galloylierten Flavan-3-ole Epigallocatechingallat und Gallocatechin sind und in einem Gewichtsverhältnis von 1:1 bis 1:8 miteinander vermischt sind und wobei die Wirkstoffformulierung aus einer gebrauchsfertigen Lösung, einem emulgierbaren Konzentrat, einer Emulsion, einer Suspension, einem Spritzpulver, einem löslichen Pulver und oder einem Granulat einer entsprechenden Wirkstoffzusammensetzung und gegebenenfalls weiteren Hilfsstoffen, insbesondere Adjuvantien, besteht.

3. Verwendung nach Anspruch 1 oder 2, **dadurch gekennzeichnet, dass** die mindestens zwei verschiedenen Wirkstoffsubstanzen in einem Gewichtsverhältnis von von 1:1 bis 1:4 miteinander vermischt sind.

4. Verwendung nach Anspruch 3, **dadurch gekennzeichnet, dass** die mindestens zwei verschiedenen Wirkstoffsubstanzen in einem Gewichtsverhältnis von 1:1 bis 1:2 miteinander vermischt sind.

5. Verwendung nach einem der Ansprüche 1 bis 4, **dadurch gekennzeichnet, dass** die Konzentration an Wirkstoffen in der Wirkstoffformulierung zwischen 4 und 2000 ppm beträgt.

6. Verwendung nach Anspruch 5, **dadurch gekennzeichnet, dass** die Konzentration an Wirkstoffen in der Wirkstoffformulierung zwischen 8 und 500 ppm beträgt.

7. Verfahren zur Bekämpfung von pilzlichen Pflanzenkrankheiten, bei dem mindestens zwei verschiedene Wirkstoffsubstanzen, ausgewählt aus der Gruppe der Stilbene einerseits und aus der Gruppe der galloylierten Flavan-3-ole und/oder aus der Gruppe der Proanthocyanidine andererseits, gleichzeitig, und zwar gemeinsam oder getrennt oder nacheinander als solche oder in ihren Formulierungen, mit einer Konzentration zwischen 4 und 2000 ppm auf eine zu behandelnde Pflanze aufgebracht werden, wobei die mindestens zwei verschiedenen Wirkstoffsubstanzen Rhaponticin + Procyanidin oder Epigallocatechin + Resveratrol oder Trihydroxystilbenglucosid + Epigallocatechin sind.

8. Verfahren zur Bekämpfung von pilzlichen Pflanzenkrankheiten, bei dem mindestens zwei verschiedene Wirkstoffsubstanzen, ausgewählt aus der Gruppe der galloylierten Flavan-3-ole, gleichzeitig, und zwar gemeinsam oder getrennt oder nacheinander als solche oder in ihren Formulierungen, mit einer Konzentration zwischen 4 und 2000 ppm auf eine zu behandelnde Pflanze aufgebracht werden, wobei die mindestens zwei verschiedenen galloylierten Flavan-3-ole Epigallocatechingallat und Gallocatechin sind.

9. Verfahren nach Anspruch 7 oder 8, **dadurch gekennzeichnet, dass** die Wirkstoffsubstanzen oder deren Formulierungen auch in Mischung, das heißt gleichzeitig, vor oder danach, mit weiteren Fungiziden, Bakteriziden, Akariziden, Nematiziden, Insektiziden und/oder weiteren Wirkstoffen, wie Herbiziden, und/oder mit Düngemitteln und/oder Wachstumsregulatoren aufgetragen werden.

10. Verfahren nach einem der Ansprüche 7 bis 9, **dadurch gekennzeichnet, dass** die Wirkstoffsubstanzen mit einer Konzentration zwischen 8 und 500 ppm aufgetragen werden.

**Claims**

1. Use of an active-ingredient composition or an active-ingredient formulation for controlling fungal plant diseases, wherein the phytopathogenic fungi to be controlled include one or more phytopathogenic fungi and wherein the active-ingredient composition consists of at least two different active-ingredient substances selected, firstly, from the group of stilbenes and, secondly, from the group of galloylated flavan-3-ols and/or from the group of proanthocyanidins, wherein the at least two different active-ingredient substances are rhaponticin + procyanidin or epigallocatechin + resveratrol or trihydroxystilbene glucoside + epigallocatechin and are mixed together in a weight ratio of from 1:1 to 1:8 and wherein the active-ingredient formulation consists of a ready-to-use solution, an emulsifiable concentrate, an emulsion, a suspension, a spray powder, a soluble powder and/or a granular material of a corresponding active-ingredient composition and optionally further excipients, more particularly adjuvants.

2. Use of an active-ingredient composition or an active-ingredient formulation for controlling fungal plant diseases, wherein the phytopathogenic fungi to be controlled include one or more phytopathogenic fungi and wherein the active-ingredient composition consists of at least two different active-ingredient substances selected from the group of galloylated flavan-3-ols, wherein the at least two different galloylated flavan-3-ols are epigallocatechin gallate and gallocatechin and are mixed together in a weight ratio of from 1:1 to 1:8 and wherein the active-ingredient formulation consists of a ready-to-use solution, an emulsifiable concentrate, an emulsion, a suspension, a spray powder, a soluble powder and/or a granular material of a corresponding active-ingredient composition and optionally further excipients, more particularly adjuvants.

3. Use according to Claim 1 or 2, **characterized in that** the at least two different active-ingredient substances are mixed together in a weight ratio of from 1:1 to 1:4.

4. Use according to Claim 3, **characterized in that** the at least two different active-ingredient substances are mixed together in a weight ratio of from 1:1 to 1:2.

5. Use according to any of Claims 1 to 4, **characterized in that** the concentration of active ingredients in the active-ingredient formulation is between 4 and 2000 ppm.

6. Use according to Claim 5, **characterized in that** the concentration of active ingredients in the active-ingredient formulation is between 8 and 500 ppm.

7. Method for controlling fungal plant diseases, in which at least two different active-ingredient substances selected, firstly, from the group of stilbenes and, secondly, from the group of galloylated flavan-3-ols and/or from the group of proanthocyanidins are applied as such or in their formulations at the same time, specifically jointly or separately, or in succession at a concentration of between 4 and 2000 ppm to a plant to be treated, wherein the at least two different active-ingredient substances are rhaponticin + procyanidin or epigallocatechin + resveratrol or trihydroxystilbene glucoside + epigallocatechin.

8. Method for controlling fungal plant diseases, in which at least two different active-ingredient substances selected from the group of galloylated flavan-3-ols are applied as such or in their formulations at the same time, specifically jointly or separately, or in succession at a concentration of between 4 and 2000 ppm to a plant to be treated, wherein the at least two different galloylated flavan-3-ols are epigallocatechin gallate and gallocatechin.

9. Method according to Claim 7 or 8, **characterized in that** the active-ingredient substances or the formulations thereof are also applied in a mixture, i.e. at the same time, before or afterwards, with further fungicides, bactericides, acaricides, nematicides, insecticides and/or further active ingredients, such as herbicides, and/or with fertilizers and/or growth regulators.

10. Method according to any of Claims 7 to 9, **characterized in that** the active-ingredient substances are applied at a concentration of between 8 and 500 ppm.

## Revendications

1. Utilisation d'une composition d'agents actifs ou d'une formulation d'agents actifs pour lutter contre des maladies fongiques de plantes, les champignons phytopathogènes contre lesquels on lutte comprenant un ou plusieurs champignons phytopathogènes et la composition d'agents actifs étant constituée par au moins deux substances actives différentes, choisies dans le groupe des stilbènes d'une part et dans le groupe des flavan-3-ols galloylés et/ou dans le groupe des proanthocyanidines d'autre part, lesdites au moins deux substances actives différentes étant la rhaponticine + la procyanidine ou l'épigallocatéchine + le resvératrol ou le trihydroxystilbène-glucoside + l'épigallocatéchine, et étant mélangées l'une avec l'autre en un rapport en poids de 1:1 à 1:8, et la formulation d'agents actifs étant constituée par une solution prête à l'emploi, un concentré émulsifiable, une émulsion, une suspension, une poudre à pulvériser, une poudre soluble et/ou un granulat d'une composition d'agents actifs correspondante et éventuellement d'autres auxiliaires, notamment d'adjuvants.

2. Utilisation d'une composition d'agents actifs ou d'une formulation d'agents actifs pour lutter contre des maladies fongiques de plantes, les champignons phytopathogènes contre lesquels on lutte comprenant un ou plusieurs champignons phytopathogènes et la composition d'agents actifs étant constituée par au moins deux substances actives différentes, choisies dans le groupe des flavan-3-ols galloylés, lesdits au moins deux flavan-3-ols galloylés différents étant le gallate d'épigallocatéchine et la gallocatéchine, et étant mélangés l'un avec l'autre en un rapport en poids de 1:1 à 1:8, et la formulation d'agents actifs étant constituée par une solution prête à l'emploi, un concentré émulsifiable, une émulsion, une suspension, une poudre à pulvériser, une poudre soluble et/ou un granulat d'une composition d'agents actifs correspondante et éventuellement d'autres auxiliaires, notamment d'adjuvants.

3. Utilisation selon la revendication 1 ou 2, **caractérisée en ce que** lesdites au moins deux substances actives différentes sont mélangées l'une avec l'autre en un rapport en poids de 1:1 à 1:4.

4. Utilisation selon la revendication 3, **caractérisée en ce que** lesdites au moins deux substances actives différentes sont mélangées l'une avec l'autre en un rapport en poids de 1:1 à 1:2.

5. Utilisation selon l'une quelconque des revendications 1 à 4, **caractérisée en ce que** la concentration d'agents actifs dans la formulation d'agents actifs est comprise entre 4 et 2 000 ppm.

6. Utilisation selon la revendication 5, **caractérisée en ce que** la concentration d'agents actifs dans la formulation d'agents actifs est comprise entre 8 et 500 ppm.

7. Procédé de lutte contre des maladies fongiques de plantes, selon lequel au moins deux substances actives différentes, choisies dans le groupe des stilbènes d'une part et dans le groupe des flavan-3-ols galloylés et/ou dans le groupe des proanthocyanidines d'autre part, sont appliquées simultanément, et ce ensemble ou séparément, ou successivement en tant que telles ou dans leurs formulations, en une concentration comprise entre 4 et 2 000 ppm, sur une plante à traiter, lesdites au moins deux substances actives différentes étant la rhaponticine + la procyanidine ou l'épigallocatéchine + le resvératrol ou le trihydroxystilbène-glucoside + l'épigallocatéchine.

8. Procédé de lutte contre des maladies fongiques de plantes, selon lequel au moins deux substances actives différentes, choisies dans le groupe des flavan-3-ols galloylés, sont appliquées simultanément, et ce ensemble ou séparément, ou successivement en tant que telles ou dans leurs formulations, en une concentration comprise entre 4 et 2 000 ppm, sur une plante à traiter, lesdits au moins deux flavan-3-ols galloylés différents étant le gallate d'épigallocatéchine et la gallocatéchine.

9. Procédé selon la revendication 7 ou 8, **caractérisé en ce que** les substances actives ou leurs formulations sont également appliquées en mélange, c'est-à-dire simultanément, avant ou après, avec d'autres fongicides, bactéricides, acaricides, nématicides, insecticides et/ou d'autres agents actifs, tels que des herbicides, et/ou avec des engrais et/ou des régulateurs de croissance.

10. Procédé selon l'une quelconque des revendications 7 à 9, **caractérisé en ce que** les substances actives sont appliquées en une concentration comprise entre 8 et 500 ppm.

**Figur 1**

**Figur 2**

**Figur 3**

**Figur 4**

EP 3 188 598 B1

# Figur 5

trans-Isomer

cis-Isomer

Figur 6

EP 3 188 598 B1

δ-Viniferin

ε-Viniferin

Figur 7

Figur 8

## Figur 9

Figur 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013110258 A1
- JP 3698745 B
- US 2010015262 A1

**In der Beschreibung aufgeführte Nicht-Patentliteratur**

- **CARUSO et al.** Antifungal Activity of Resveratrol against Botrytis cinerea Is Improved Using 2-Furyl Derivatives. *PLoS ONE,* 2011, vol. 6 (10), e25421
- **ALBERT et al.** Synthesis and antimicrobial activity of (E) stilbene derivatives. *Bioorganic & Medicinal Chemistry,* 2011, vol. 19, 5155-5166
- **SEPPÄNEN et al.** Antifungal activity of stilbenes in in vitro bioassays and in transgenic Populus expressing a gene encoding pinosylvin synthase. *Plant Cell Reports,* 2004, vol. 22, 584-593
- Inhibition of Phytopathogenic Fungi on Selected Vegetable Crops by Catechins, Caffeine, Theanine and Extracts of Camellia sinensis (L.) O. Kuntze. **M. WILMOT.** Master Thesis. Faculty of Natural and Agricultural Sciences, University of Pretoria, 01. September 2006, 1-132
- **URSKA VRHOVSEK et al.** A Versatile Targeted Metabolomics Method for the Rapid Quantification of Multiple Classes of Phenolics in Fruits and Beverages. *JOURNAL OF AGRICULTURAL AND FOOD CHEMISTRY,* 03. April 2012, vol. 60 (36), 8831-8840
- **S.R. COLBY.** Calculating Synergistic and Antagonistic Responses of Herbicide Combinations. *Weeds,* 1967, vol. 15, 20-22